# EUROPEAN PATENT SPECIFICATION

(11) **EP 4 263 255 B1**
(45) Date of publication and mention of the grant of the patent: **09.04.2025**
(21) Application number: 21834908.2
(22) Date of filing: 10.12.2021
(51) Int. Cl.: B60K 11/04

(54) **VEHICLE PROVIDED WITH AN IMPROVED AERODYNAMIC SYSTEM**
FAHRZEUG MIT EINEM VERBESSERTEN AERODYNAMISCHEN SYSTEM
VÉHICULE POURVU D'UN SYSTÈME AÉRODYNAMIQUE AMÉLIORÉ

(30) Priority: 18.12.2020 IT 202000031532
(43) Date of publication of application: 25.10.2023
(73) Proprietor: IVECO S.P.A., 10156 Torino (IT)
(72) Inventor: BRONDOLO, Luca, 14040 Vigliano d'Asti (AT) (IT)
(74) Representative: Studio Torta S.p.A.
(86) International application number: PCT/IB2021/061571
(87) International publication number: WO 2022/130148

(56) References cited:
- DE-A1- 3 916 692
- US-A- 3 827 523
- US-A- 4 362 208

## Description

### TECHNICAL SECTOR

The present invention relates to a heavy-duty vehicle comprising an improved aerodynamic system, in particular to a hydrogen-powered heavy-duty vehicle.

### BACKGROUND OF THE INVENTION

There is a growing need to replace fossil energy sources for vehicle traction. This need is all the greater in heavy-duty and commercial vehicles, such as trucks, which have to meet high traction specifications.

A well-known solution for replacing fossil energy sources is to use hydrogen drive systems such as fuel cells.

However, such fuel cells need to be constantly conditioned to prevent overheating. Therefore, it is known to provide additional heat exchangers that are normally located in an elevated position in the space behind the vehicle cabin, what is normally the space between the cabin and the trailer of a truck.

In this position, the heat exchangers receive the flow of air flowing over the top wall of the cabin in order to advantageously allow heat exchange with an air conditioning fluid flowing inside the heat exchanger.

However, this arrangement presents two problems.

Firstly, the arrangement of these heat exchangers increases the turbulence of the air flow behind the cab. This generates a resistant force, known as drag, to the motion of the vehicle.

In addition, the turbulent air leaving the heat exchanger, being heated, tends to recirculate around the heat exchanger, decreasing its thermodynamic efficiency.

Examples of air guidance systems in vehicles as known in the art are disclosed by publications US3827523 A, DE3916692 A or US4362208 A.

There is therefore a need to provide for the installation of heat exchangers dedicated to the cooling circuit of a heavy-duty vehicle fuel cell, so that neither the thermal performance of the latter nor the overall aerodynamics of the vehicle suffer.

The aim of the present invention is to meet the above requirements in an economical and optimised manner.

### SUMMARY OF THE INVENTION

The aforementioned purpose is achieved by a vehicle equipped with an aerodynamic system as claimed in the attached independent claims.

Further preferred embodiments of the invention are made according to the dependent or related claims to the above-mentioned independent claims.

### BRIEF DESCRIPTION OF THE DRAWINGS

An embodiment is described below for a better understanding of the present invention, provided by way of non-limiting example with reference to the accompanying drawings, wherein:
- figure 1 is a schematic side view illustrating a portion of a heavy-duty vehicle comprising an aerodynamic system according to a first embodiment of the invention;
- figure 2 is a perspective view illustrating a portion of a heavy-duty vehicle comprising an aerodynamic system according to a first embodiment of the invention;
- figure 3 is a schematic side view illustrating a portion of a heavy-duty vehicle comprising an aerodynamic system according to a second embodiment of the invention; and
- figure 4 is a perspective view illustrating a portion of a heavy-duty vehicle comprising an aerodynamic system according to a second embodiment of the invention.

### DETAILED DESCRIPTION OF THE INVENTION

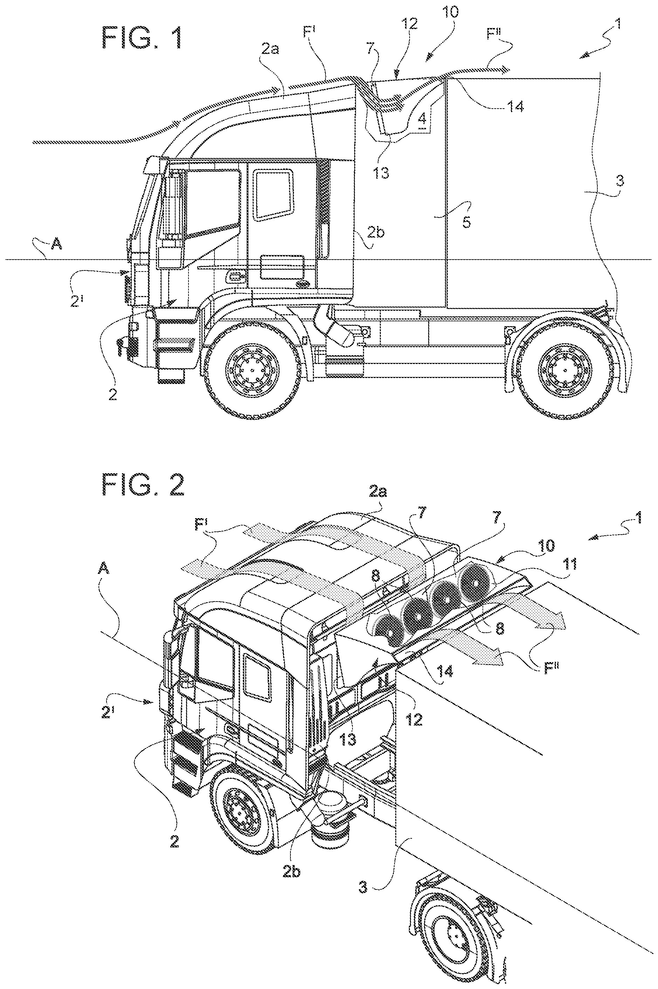

In figure 1, the number 1 refers overall to a heavy-duty vehicle, for example a truck, comprising a cabin 2 configured to tow a semi-trailer 3.

Clearly the cabin 2 and the semi-trailer 3 can be any shape and are normally spaced out by a space 4 along a longitudinal axis A of the vehicle.

In more detail, the cabin 2 comprises a plurality of walls 2' defining a compartment for the driver and in particular a roof 2a and a rear wall 2b.

Preferably, between the cabin 2 and semi-trailer 3, vehicle 1 may comprise, as is known, a side closure element 5 conspired to laterally delimit the space 4 and promote the aerodynamics of the vehicle.

The vehicle 1 is, at least partially, powered by hydrogen and therefore includes fuel cells, not illustrated, suitable for this purpose. Consequently, the vehicle 1 is provided with a conditioning system configured to maintain these cells at a predetermined operating temperature.

Advantageously, a portion of this conditioning system is placed in the space 5, in particular at least one heat exchanger 7 and ventilation means 8, advantageously carried by the cabin 2, are housed in this space. In the example illustrated there are two heat exchangers 7 placed laterally in contact in a transverse direction with respect to the axis A and a plurality of electric fans as ventilation means 8.

As schematically illustrated, the ventilation means 8 are placed to the rear with respect to the at least one heat exchanger 7 along the direction of travel of the vehicle with respect to the axis A so as to promote the suction of an incoming air flow F' after flowing over the roof 2a of the cabin and the expulsion of a superheated outgoing air flow F'' from the heat exchanger 7.

According to the invention, referring to figures 1 and 2, the vehicle 1 is provided with an aerodynamic system 10 housed in the space 4 and defining a space 11 in which the at least one heat exchanger 7 and the ventilation means 8 are housed, the aerodynamic system 10 is dimensioned so as to channel the flow F" of air leaving the ventilation means 8 so that it is directed around the semi-trailer 3, thus preventing the formation of vortices in the space 4. In particular, this flow F" is advantageously directed above semi-trailer 3.

In more detail, the aerodynamic system 10 comprises a box shaped element 12, advantageously carried by the cabin 2 and comprises a plurality of walls laterally delimiting the space 11 and axially defining a front opening 13 and a rear opening 14. In particular, the front opening 13 is occupied, at least partially and preferably in its entirety, by the at least one heat exchanger 7 while the rear opening 14 is free.

In more detail, these openings 13, 14 are essentially rectangular in shape. Preferably, both openings 13, 14 are contained in planes whose perpendicular axis is inclined with respect to an axis vertical to the axis A. In greater detail, the openings 13, 14 are contained in planes which are not parallel to each other.

Advantageously, the rear opening 14 is, at least partially, turned upwards so as to direct the flow F" above the trailer 3.

In particular, the shape of the box 12 is tapered between the front opening 13 and the rear opening 14, decreasing in cross-sectional area, so as to allow the housing of a heat exchanger 7 of large surface area and at the same time accelerating the flow F" of air exiting therefrom.

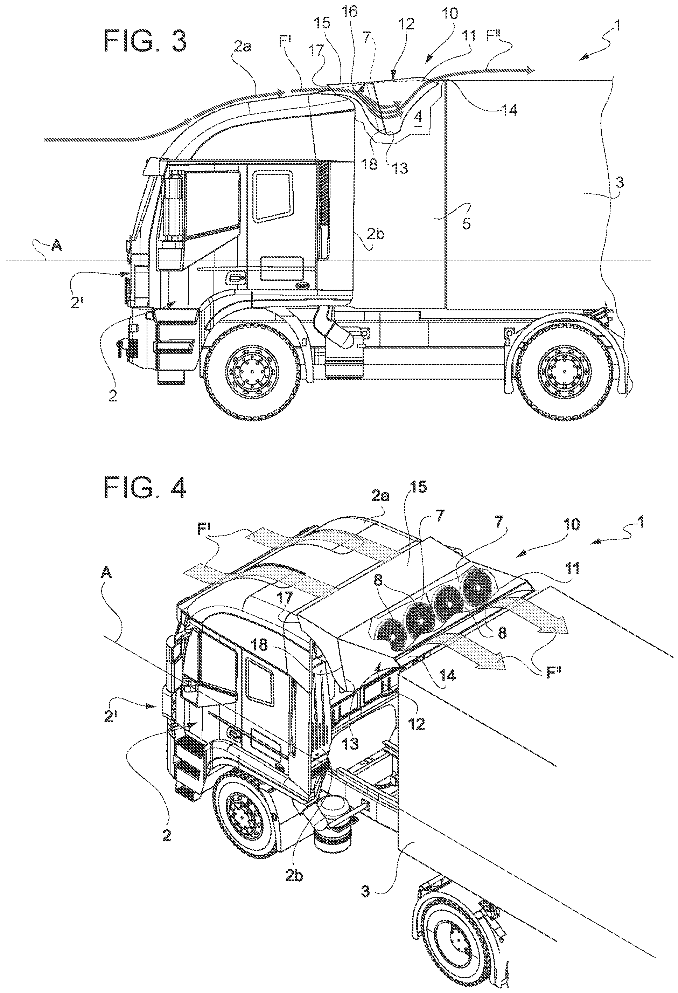

According to an alternative embodiment, illustrated in figures 3 and 4, the aerodynamic system 10 is also configured to convey the air flow F' passing around the cabin 2, in particular above it, through the at least one heat exchanger 7.

In such a case, the aerodynamic system 10 comprises an additional box element 15, advantageously carried by the cabin 2 and defining an interior space 16. In particular, the further box shaped element 15 comprises a plurality of walls laterally delimiting the space 16 and axially defining a front opening 17 and a rear opening 18. In particular, the front opening 17 is free while the rear opening 18 faces the front opening 13.

Advantageously, the two boxes 12 and 15 can be made as a single piece, so that the rear opening 18 and the front opening 13 coincide. Also with respect to the further box 15, the openings 16, 17 are substantially rectangular in shape and are contained in planes whose perpendicular axis is inclined with respect to an axis vertical to the axis A. In more detail, they are also contained in planes which are not parallel to each other.

Advantageously, the front opening 17 is, at least partially, located above the roof 2a of the cabin 2.

In particular, the shape of the box 15 is tapered between the front opening 17 and the rear opening 18, increasing in cross-sectional area, so as to allow the housing of a heat exchanger 7 of large surface area and at the same time channelling the incoming flow F' without dispersion due to the formation of vortices.

In an alternative embodiment, which is not illustrated, the opening 14, and if provided, the opening 17, are defined in an end portion of the respective box shaped element 12, 15 so that this end portion is adjustable, in particular to vary the position and/or inclination of the respective opening 14 or 17, in order to cover different configurations of the cabin 2 and semi-trailer 3, i.e. having different geometries.

In particular, this adjustable end portion can be made in different ways, for example by means of a bellows portion or a telescopic portion and actuated by specific actuators, for example electromechanical or hydraulic. Advantageously the adjustment shall achieve the positioning of the opening 14 in such a way that it allows the flow F" to pass over the semi-trailer and, if present, the opening 17, to be positioned at the roof 2a of the cabin 2.

The operation of the embodiment of the vehicle provided with an aerodynamic system according to the above-described invention is as follows.

Referring to the embodiments 1 and 2, the flow of air F' flowing over the roof 2a of the cabin 2 impacts directly on the heat exchangers 7 and is forced by the suction of the ventilation means 8 to pass through the box 12 which directs it above the semi-trailer 3.

Referring to the embodiments 3 and 4, the flow of air F' flowing over the roof 2a of the cabin 2 is channelled to flow over the heat exchangers 7 and is forced by the suction of the ventilation means 8 to pass through the box 12 which directs it above the semi-trailer 3.

From the foregoing, the advantages of a vehicle equipped with an aerodynamic system according to the invention are apparent.

Thanks to the aerodynamic system described, it is possible to reduce the aerodynamic drag by about 4% and increase the efficiency of the heat exchangers 7 due to the lower temperature in the space 4.

Again, in the version including the additional box, it is possible to channel the air flow to the exchangers, further increasing their efficiency.

In addition, the aerodynamic system described can be used and adjusted for any type and geometry of cabin 2 and trailer 3.

Finally, it is clear that modifications and variations can be made to the aerodynamic system according to the present invention which, however, do not depart from the scope of protection defined by the claims.

Clearly, there may be any number and type of heat exchangers and ventilation means. The same applies to the type and geometry of cabin and trailer.

Again, the tapered shape of the box or openings may be different.

## Claims

1. Vehicle (1) comprising a cabin (2) and configured to tow a trailer (3), said cabin (2) and said trailer (3) when towed defining a space (4) between them, said vehicle (1) comprising at least one heat exchanger (7) housed, at least partially, in said space (4), said vehicle (1) comprising an aerodynamic system (10) comprising a box (12) defining a space (11) between a front opening (13) facing towards said cab (2) and a rear opening (14) facing said trailer (3), said space (11) being configured to house said heat exchanger (7),
said box (12) being configured to guide the inlet of a first air flow (F') flowing around said cabin (2) towards said at least one heat exchanger (7) and to guide a second air flow (F") exiting said heat exchanger (7) so as to direct it around said trailer (3).

2. Vehicle according to claim 1, wherein said aerodynamic system (10) guide said second air flow (F") above said trailer (3).

3. Vehicle according to one of Claims 1 or 2, wherein said rear opening (14) being free while said front opening (13) houses said at least one heat exchanger (7).

4. Vehicle according to Claim 3, wherein said box (12) has a tapered cross section between said front opening (13) to said rear opening (14), said rear opening (14) defining a passage of smaller area than said front opening (13).

5. Vehicle according to any of the preceding claims, wherein said aerodynamic system (10) channels said first air flow (F') of air flowing through a roof (2a) of said cabin (2).

6. Vehicle according to one of claims 4 or 5, wherein said aerodynamic system (10) comprises a further box (15) defining said space (16) and a front opening (13) facing towards said cab (2) and an opening rear (14) said front opening (17) being free while said rear opening (18) facing said opening (13) of said box (12).

7. A vehicle according to Claim 6, in which said boxed boxes (12, 15) are made in one piece.

8. Vehicle according to Claim 6 or 7, wherein said further box (15) has a tapered cross section between said front opening (17) to said rear opening (18), said rear opening (18) defining an area passage greater than said front opening (17).

9. Vehicle according to one of claims 2 to 5, wherein said rear opening (14) is made on an end portion of said box (12), said end portion being adjustable to vary the position and / or inclination of said rear opening (14).

10. Vehicle according to one of claims 7 to 10, wherein said front opening (17) is made on an end portion of said further box (15), said end portion being adjustable to vary the position and / or inclination of said front opening (17)

11. Vehicle according to one of the preceding claims, wherein said vehicle comprises ventilation means (8), said ventilation means (8) being housed in said aerodynamic system (10) downstream from said heat exchanger (7) with respect to said first and second flows (F', F").

12. Vehicle according to any one of the preceding claims comprising at least one fuel cell, and a conditioning system for said fuel cell, said at least one heat exchanger (7) forming part of said conditioning system.

## Patentansprüche

1. Fahrzeug (1), umfassend eine Kabine (2) und dazu eingerichtet einen Anhänger (3) zu ziehen, wobei die Kabine (2) und der Anhänger (3), wenn er gezogen wird, einen Raum (4) zwischen sich begrenzen, wobei das Fahrzeug (1) mindestens einen Wärmetauscher (7) umfasst, der zumindest teilweise in diesem Raum (4) untergebracht ist, wobei das Fahrzeug (1) ein aerodynamisches System (10) umfasst, das einen Kasten (12) umfasst, der einen Raum (11) zwischen einer vorderen Öffnung (13), die zur Kabine (2) hin ausgerichtet ist, und einer hinteren Öffnung (14), die zum Anhänger (3) hin ausgerichtet ist, begrenzt, wobei der Raum (11) eingerichtet ist, um den Wärmetauscher (7) aufzunehmen,
und der Kasten (12) eingerichtet ist, den Einlass eines ersten Luftstroms (F'), der um die Kabine (2) herum strömt, in Richtung des mindestens einen Wärmetauschers (7) zu leiten und einen zweiten Luftstrom (F"), der den Wärmetauscher (7) verlässt, so zu führen, dass dieser um den Anhänger (3) herum geleitet wird.

2. Fahrzeug nach Anspruch 1, wobei das aerodynamische System (10) den zweiten Luftstrom (F") über den Anhänger (3) führt.

3. Fahrzeug nach einem der Ansprüche 1 oder 2, wobei die hintere Öffnung (14) frei ist, während die vordere Öffnung (13) den mindestens einen Wärmetauscher (7) aufnimmt.

4. Fahrzeug nach Anspruch 3, wobei der Kasten (12) einen sich verjüngenden Querschnitt zwischen der vorderen Öffnung (13) und der hinteren Öffnung (14) aufweist, wobei die hintere Öffnung (14) einen Durchgang mit kleinerer Fläche als die vordere Öffnung (13) ausbildet.

5. Fahrzeug nach einem der vorhergehenden Ansprüche, wobei das aerodynamische System (10) den ersten Luftstrom (F') durch ein Dach (2a) der Kabine (2) leitet.

6. Fahrzeug nach einem der Ansprüche 4 oder 5, wobei das aerodynamische System (10) einen weiteren Kasten (15) umfasst, der einen Raum (16) begrenzt, sowie eine vordere Öffnung (13), die zur Kabine (2) hin ausgerichtet ist, und eine hintere Öffnung (14), wobei die vordere Öffnung (17) frei ist, während die hintere Öffnung (18) zur Öffnung (13) des Kastens (12) hin ausgerichtet ist.

7. Fahrzeug nach Anspruch 6, wobei die Kästen (12, 15) einstückig ausgebildet sind.

8. Fahrzeug nach Anspruch 6 oder 7, wobei der weitere Kasten (15) einen sich verjüngenden Querschnitt zwischen der vorderen Öffnung (17) und der hinteren Öffnung (18) aufweist, wobei die hintere Öffnung (18) eine größere Durchgangsfläche als die vordere Öffnung (17) ausbildet.

9. Fahrzeug nach einem der Ansprüche 2 bis 5, wobei die hintere Öffnung (14) an einem Endabschnitt des Kastens (12) angeordnet ist, wobei dieser Endabschnitt verstellbar ist, um die Position und/oder die Neigung der hinteren Öffnung (14) zu variieren.

10. Fahrzeug nach einem der Ansprüche 7 bis 10, wobei die vordere Öffnung (17) an einem Endabschnitt des weiteren Kastens (15) angeordnet ist, wobei dieser Endabschnitt verstellbar ist, um die Position und/oder die Neigung der vorderen Öffnung (17) zu variieren.

11. Fahrzeug nach einem der vorhergehenden Ansprüche, wobei das Fahrzeug Belüftungsmittel (8) umfasst, wobei die Belüftungsmittel (8) in dem aerodynamischen System (10) stromabwärts des Wärmetauschers (7) in Bezug auf die ersten und zweiten Strömungen (F', F") untergebracht sind.

12. Fahrzeug nach einem der vorhergehenden Ansprüche, umfassend zumindest eine Brennstoffzelle und ein Konditionierungssystem für diese Brennstoffzelle, wobei der mindestens eine Wärmetauscher (7) einen Teil des Konditionierungssystems bildet.

## Revendications

1. Véhicule (1) comprenant un habitacle (2) et configuré pour remorquer une remorque (3), ledit habitacle (2) et ladite remorque (3) lorsqu'ils sont remorqués définissant un espace (4) entre eux, ledit véhicule (1) comprenant au moins un échangeur de chaleur (7) logé, au moins partiellement, dans ledit espace (4), ledit véhicule (1) comprenant un système aérodynamique (10) comprenant une boîte (12) définissant un espace (11) entre une ouverture avant (13) faisant face en direction dudit habitacle (2) et une ouverture arrière (14) faisant face à ladite remorque (3), ledit espace (11) étant configuré pour loger ledit échangeur de chaleur (7),
ladite boîte (12) étant configurée pour guider l'entrée d'un premier flux d'air (F') circulant autour dudit habitacle (2) en direction dudit au moins un échangeur de chaleur (7) et pour guider un second flux d'air (F") sortant dudit échangeur de chaleur (7) de manière à le diriger autour de ladite remorque (3).

2. Véhicule selon la revendication 1, dans lequel ledit système aérodynamique (10) guide ledit second flux d'air (F") au-dessus de ladite remorque (3).

3. Véhicule selon l'une des revendications 1 ou 2, dans lequel ladite ouverture arrière (14) est libre alors que ladite ouverture avant (13) loge ledit au moins un échangeur de chaleur (7).

4. Véhicule selon la revendication 3, dans lequel ladite boîte (12) présente une section transversale conique entre ladite ouverture avant (13) et ladite ouverture arrière (14), ladite ouverture arrière (14) définissant un passage de zone plus petite que ladite ouverture avant (13).

5. Véhicule selon l'une quelconque des revendications précédentes, dans lequel ledit système aérodynamique (10) canalise ledit premier flux d'air (F') d'air circulant à travers un toit (2a) dudit habitacle (2).

6. Véhicule selon l'une des revendications 4 ou 5, dans lequel ledit système aérodynamique (10) comprend une autre boîte (15) définissant ledit espace (16) et une ouverture avant (13) faisant face en direction dudit habitacle (2) et une ouverture arrière (14) de ladite ouverture avant (17) étant libre alors que ladite ouverture arrière (18) fait face à ladite ouverture (13) de ladite boîte (12).

7. Véhicule selon la revendication 6, dans lequel lesdites boîtes (12, 15) encadrées sont réalisées d'une seule pièce.

8. Véhicule selon la revendication 6 ou 7, dans lequel ladite autre boîte (15) présente une section transversale conique entre ladite ouverture avant (17) et ladite ouverture arrière (18), ladite ouverture arrière (18) définissant un passage de zone supérieur à ladite ouverture avant (17).

9. Véhicule selon l'une des revendications 2 à 5, dans lequel ladite ouverture arrière (14) est réalisée sur une partie d'extrémité de ladite boîte (12), ladite partie d'extrémité étant réglable pour faire varier la position et/ou l'inclinaison de ladite ouverture arrière (14).

10. Véhicule selon l'une des revendications 7 à 10, dans lequel ladite ouverture avant (17) est réalisée sur une partie d'extrémité de ladite autre boîte (15), ladite partie d'extrémité étant réglable pour faire varier la position et/ou l'inclinaison de ladite ouverture avant (17).

11. Véhicule selon l'une des revendications précédentes, dans lequel ledit véhicule comprend des moyens de ventilation (8), lesdits moyens de ventilation (8) étant logés dans ledit système aérodynamique (10) en aval dudit échangeur de chaleur (7) par rapport aux premier et second flux (F', F").

12. Véhicule selon l'une quelconque des revendications précédentes comprenant au moins une pile à combustible, et un système de conditionnement pour ladite pile à combustible, ledit au moins un échangeur de chaleur (7) faisant partie dudit système de conditionnement.
